# EUROPÄISCHE PATENTSCHRIFT

(11) **EP 1 260 905 B1**
(45) Veröffentlichungstag und Bekanntmachung des Hinweises auf die Patenterteilung: **07.04.2010**
(21) Anmeldenummer: 02011038.3
(22) Anmeldetag: 17.05.2002
(51) Int. Cl.: G06F 11/36

(54) **Programmgesteuerte Einheit**
Program-controlled unit
Unité commandée par programme

(30) Priorität: 23.05.2001 DE 10125388
(43) Veröffentlichungstag der Anmeldung: 27.11.2002
(73) Patentinhaber: Infineon Technologies AG, 81669 München (DE)
(72) Erfinder: Kolof, Andreas, 82194 Gröbenzell (DE); Mayer, Albrecht, Dr., 82041 Deisenhofen (DE)
(74) Vertreter: Repkow, Ines

(56) Entgegenhaltungen:
- EP-A- 0 720 092
- EP-A- 0 764 903
- US-A- 5 826 047

## Beschreibung

### Programmgesteuerte Einheit

Die vorliegende Erfindung betrifft eine Vorrichtung gemäß dem Oberbegriff des Patentanspruchs 1, d.h. eine programmgesteuerte Einheit mit einer CPU, mit über einen internen Bus mit der CPU verbundenen Peripherieeinheiten, und mit Debug-Ressourcen, unter Verwendung welcher in der programmgesteuerten Einheit ablaufende Vorgänge verfolgbar und beeinflußbar sind.

Programmgesteuerte Einheiten wie Mikroprozessoren, Mikrocontroller, Signalprozessoren etc. sind seit vielen Jahren in unzähligen Ausführungsformen bekannt.

Ein bekanntes Problem von programmgesteuerten Einheiten besteht darin, daß darin auftretende Fehler häufig nicht ohne weiteres lokalisierbar und/oder behebbar sind.

Die Lokalisierung und Behebung von in programmgesteuerten Einheiten auftretenden Fehlern erfolgte früher und teilweise auch jetzt noch unter Verwendung spezieller Bond-Out-Versionen der zu untersuchenden programmgesteuerten Einheiten. Bond-Out-Versionen von programmgesteuerten Einheiten unterscheiden sich von den in Massenprodukten eingesetzten Standard-Versionen der betreffenden programmgesteuerten Einheiten dadurch, daß sie mehr Ein- und/oder Ausgabeanschlüsse aufweisen, wobei die zusätzlichen Ein- und/oder Ausgabeanschlüsse mit in der Standard-Version der programmgesteuerten Einheit nicht frei zugänglichen Stellen der programmgesteuerten Einheit verbunden sind. Dadurch können Informationen über interne Zustände oder Vorgänge, genauer gesagt normalerweise nicht ausgegebene Adressen, Daten und/oder Steuersignale wie beispielsweise, aber bei weitem nicht ausschließlich der jeweils aktuelle Stand des Program Counter, aus der programmgesteuerten Einheit ausgegeben und außerhalb der programmgesteuerten Einheit ausgewertet werden. Durch die Auswertung der Informationen läßt sich der Verlauf der innerhalb der programmgesteuerten Einheit ablaufenden Vorgänge verfolgen, wodurch in der programmgesteuerten Einheit auftretende Fehler lokalisiert und behoben werden können.

Die Verwendung von Bond-Out-Versionen ist jedoch mit einer Reihe von Nachteilen verbunden. Insbesondere sind die Bond-Out-Versionen von programmgesteuerten Einheiten größer und teurer als die Standard-Versionen, und, was noch wichtiger ist, verhalten sich die Bond-Out-Versionen in der Regel nicht exakt so wie die Standard-Versionen.

Man ist daher teilweise dazu übergegangen, programmgesteuerte Einheiten mit Debug-Ressourcen auszustatten.

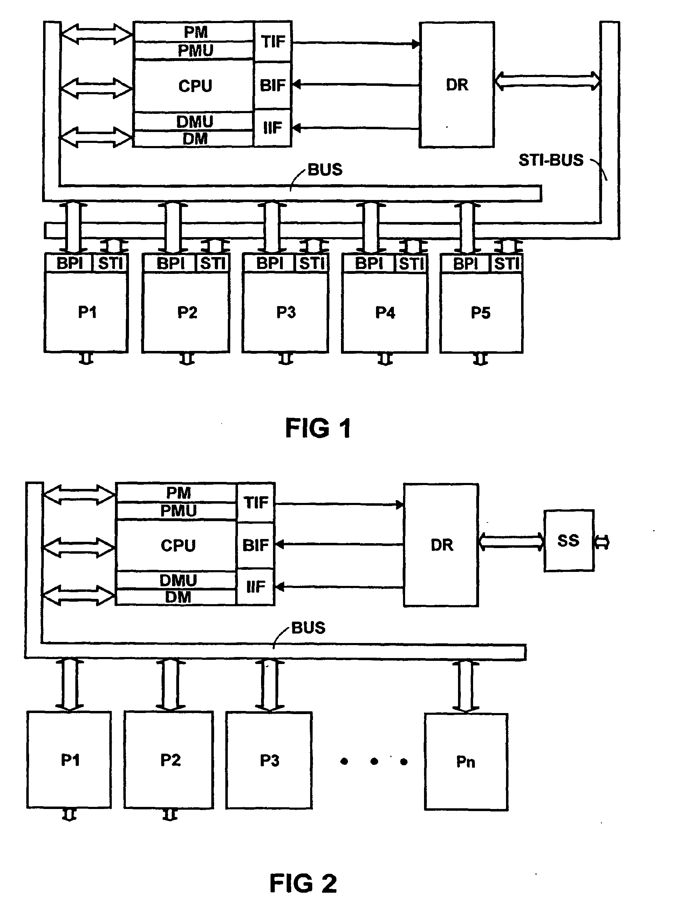

Eine solche programmgesteuerte Einheit ist in Figur 2 dargestellt.

Ein solcher Mikroprozessor mit Fehlerbeseitigungs- Ressourcen ist auch in Dokument EP-A-0 720 092 offenbart.

Die in der Figur 2 gezeigte programmgesteuerte Einheit ist ein Mikrocontroller und enthält eine CPU CPU, einen über eine Programmspeicher-Managementeinheit PMU mit der CPU verbundenen Programmspeicher PM, einen über eine Datenspeicher-Managementeinheit DMU mit der CPU verbundenen Datenspeicher DM, Peripherieeinheiten P1 bis Pn, einen die CPU, den Programmspeicher PM, den Datenspeicher DM, und die Peripherieeinheiten P1 bis P5 miteinander verbindenden internen Bus BUS, Debug-Ressourcen DR, und eine den Debug-Ressourcen DR zugeordnete Schnittstelle SS, über welche die Debug-Ressourcen DR an eine externe Einrichtung auszugebende Daten ausgeben, und über welche die Debug-Ressourcen DR von der externen Einrichtung Daten erhalten.

Die Peripherieeinheiten P1 bis Pn sind beispielsweise ein A/D-Wandler, ein Timer, ein Codierer, eine Komprimierungseinrichtung, eine USB-Schnittstelle, eine CAN-Schnittstelle, eine Ethernet-Schnittstelle oder sonstige in Mikrocontroller integrierbare Einheiten.

Die Debug-Ressourcen DR sind vorzugsweise in der Lage, sogenannte Trace-Informationen auszugeben. Hierzu wird durch die Debug-Ressourcen DR das Auftreten von von außerhalb der programmgesteuerten Einheit vorgebbaren Bedingungen innerhalb der programmgesteuerten Einheit überwacht, und jedesmal, wenn die Bedingung oder eine der Bedingungen erfüllt ist, ohne eine Unterbrechung des Betriebes der programmgesteuerten Einheit von außerhalb der programmgesteuerten Einheit vorgebbare Adressen, Daten und/oder Steuersignale aus der programmgesteuerten Einheit ausgegeben. Dadurch ist es beispielsweise, aber bei weitem nicht ausschließlich möglich, daß die Debug-Ressourcen DR jedesmal, wenn die CPU Daten von einer bestimmten Adresse oder einem bestimmten Adreßbereich lesen möchte, die der CPU daraufhin zugeführten Daten aus der programmgesteuerten Einheit ausgeben.

Im allgemeinen führen die Debug-Ressourcen DR darüber hinaus auch noch weitere Aktionen aus, die für die Lokalisierung und Behebung von in der programmgesteuerten Einheit auftretenden Fehlern notwendig oder hilfreich sind. So sind die Debug-Ressourcen DR beispielsweise in der Lage, die programmgesteuerte Einheit beim Auftreten bestimmter Bedingungen, beispielsweise bei Erreichen eines bestimmten Program-Counter-Standes anzuhalten und die Inhalte von interessierenden Registern auszulesen oder zu verändern.

Solche, auch als OCDS-Module (On Chip Debug Support Module) oder OCE-Module (On Chip Emulation Module) bezeichneten Debug-Ressourcen sind bekannt, so daß auf die Beschreibung weiterer Einzelheiten verzichtet wird.

Aufgrund der zunehmenden Bedeutung des Vorsehens von Debug Ressourcen in programmgesteuerten Einheiten wurde von der IEEE Industry Standards and Technology Organization (IEEE-ISTO) in 1999 ein als "The Nexus 5001 Forum Standard for a Global Embedded Processor Debug Interface" bezeichneter Standard für das Interface (die Schnittstelle SS) definiert, über welches die Debug-Ressourcen mit einer außerhalb der programmgesteuerten Einheit vorgesehenen Einrichtung, beispielsweise mit einer Debug- oder Emulations-Steuereinheit, oder mit einem Meßgerät wie etwa einem Logikanalysator auf besonders effiziente Art und Weise Daten austauschen können.

Die Realisierung der Schnittstelle SS durch ein NEXUS-Interface ermöglicht es, daß die Schnittstelle SS auch dann, wenn über diese große Datenmengen zu transferieren sind, klein ausgebildet sein kann, d.h. insbesondere nur wenige Pins umfassen kann.

Für bestimmte Anwendungen der programmgesteuerten Einheit können aber auch diese wenigen zusätzlichen Pins störend sein. Dies ist der Fall, wenn die programmgesteuerte Einheit wie beispielsweise eine in einem Mobiltelefon eingesetzte programmgesteuerte Einheit möglichst klein sein soll.

Der vorliegenden Erfindung liegt daher die Aufgabe zugrunde, eine Möglichkeit zu finden, durch welche für den Austausch von Daten zwischen den Debug-Ressourcen und einer außerhalb der programmgesteuerten Einheit vorgesehenen Einrichtung möglichst wenige zusätzliche Pins erforderlich sind.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß die Debug-Ressourcen und Peripherieeinheiten, welche Daten aus der programmgesteuerten Einheit ausgeben und/oder der programmgesteuerten Einheit von außen zugeführte Daten entgegennehmen und weiterleiten können, über einen zweiten internen Bus miteinander verbunden sind, und daß zwischen den Debug-Ressourcen und außerhalb der programmgesteuerten Einheit vorgesehenen Einrichtungen zu übertragende Daten über den zweiten internen Bus und einzelne, mehrere oder alle der daran angeschlossenen Peripherieeinheiten übertragen werden.

D.h., es werden für den Austausch von Daten zwischen den Debug-Ressourcen und einer außerhalb der programmgesteuerten Einheit vorgesehenen Einrichtung ohnehin in der programmgesteuerten Einheit vorgesehene Komponenten der programmgesteuerten Einheit verwendet und folglich überhaupt keine zusätzlichen Schnittstellen und Pins benötigt.

Bedingt durch den Umstand, daß die Debug-Ressourcen über einen eigenen Bus mit den die Daten von und zu den Debug-Ressourcen transferierenden Peripherieeinheiten verbunden sind, besteht trotz der gemeinsamen Benutzung von Peripherieeinheiten keine Gefahr, daß sich die Debug-Ressourcen und die restlichen Bestandteile der programmgesteuerten Einheit gegenseitig stören.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: den Aufbau der im folgenden näher beschriebenen programmgesteuerten Einheit, und
- Figur 2: den Aufbau der eingangs beschriebenen herkömmlichen programmgesteuerten Einheit.

Bei der im folgenden beschriebenen programmgesteuerten Einheit handelt es sich um einen Mikrocontroller. Die nachfolgend beschriebenen Besonderheiten des Mikrocontrollers lassen sich jedoch auch bei beliebigen anderen programmgesteuerten Einheiten einsetzen.

Die im folgenden beschriebene programmgesteuerte Einheit ist schematisch in Figur 1 dargestellt. Der Vollständigkeit halber sei darauf hingewiesen, daß nur die vorliegend besonders interessierenden Komponenten der programmgesteuerten Einheit gezeigt sind und beschrieben werden.

Die in der Figur 1 gezeigte programmgesteuerte Einheit enthält eine CPU CPU, einen über eine Programmspeicher-Managementeinheit PMU mit der CPU verbundenen Programmspeicher PM, einen über eine Datenspeicher-Managementeinheit DMU mit der CPU verbundenen Datenspeicher DM, Peripherieeinheiten P1 bis P5, Debug-Ressourcen DR, einen die CPU, den Programmspeicher PM, den Datenspeicher DM, und die Peripherieeinheiten P1 bis P5 miteinander verbindenden internen Bus BUS, sowie einen die Debug-Ressourcen DR und die Peripherieeinheiten P1 bis P5 miteinander verbindenden zweiten internen Bus STI-BUS.

Die Peripherieeinheiten P1 bis P5 sind Schnittstellen, über welche
- aus der programmgesteuerten Einheit Daten an eine außerhalb der programmgesteuerten Einheit vorgesehene Einrichtung ausgegeben werden können, und/oder
- die programmgesteuerte Einheit Daten von einer außerhalb der programmgesteuerten Einheit vorgesehenen Einrichtung empfangen kann.

Von den Peripherieeinheiten P1 bis P5 sind im betrachteten Beispiel
- die Peripherieeinheit P1 eine USB-Schnittstelle,
- die Peripherieeinheit P2 eine CAN-Schnittstelle,
- die Peripherieeinheit P3 eine Ethernet-Schnittstelle,
- die Peripherieeinheit P4 eine Serial-ATA-Schnittstelle, und
- die Peripherieeinheit P5 eine sonstige Schnittstelle zur Ein- und/oder Ausgabe von Daten aus bzw. in die programmgesteuerte Einheit.

Der Vollständigkeit halber sei darauf hingewiesen, daß am ersten internen Bus BUS auch noch beliebige andere Komponenten der programmgesteuerten Einheit wie beispielsweise ein A/D-Wandler, ein Timer, eine Codiereinrichtung, eine Komprimierungseinrichtung etc. angeschlossen sein können.

Nicht am ersten Bus oder nur zu Überwachungszwecken am ersten Bus BUS sind die Debug-Ressourcen DR. Andererseits sind die CPU, der Programmspeicher PM, der Datenspeicher DM, und Peripherieeinheiten, die keine Daten aus der programmgesteuerten Einheit ausgeben und keine Daten von außerhalb der programmgesteuerten Einheit empfangen können, nicht am zweiten Bus STI-BUS angeschlossen.

Die Peripherieeinheiten, die Daten aus der programmgesteuerten Einheit ausgeben können, und/oder Daten von außerhalb der programmgesteuerten Einheit vorgesehenen Einrichtungen empfangen können, sind jedoch zumindest teilweise sowohl mit dem ersten Bus BUS als auch mit dem zweiten BUS STI-BUS verbunden. Jede dieser Peripherieeinheiten, d.h. jede der Peripherieeinheiten P1 bis P5 weist ein Interface BPI zum ersten Bus BUS sowie ein Interface STI zum zweiten Bus STI-BUS auf.

Die Peripherieeinheiten P1 bis P5 sind dadurch in der Lage,
- wahlweise von den am ersten Bus BUS angeschlossenen Komponenten ausgegebene Daten oder aus den Debug-Ressourcen DR ausgegebene Daten aus der programmgesteuerte Einheit auszugeben, und/oder
- Daten, die von einer außerhalb der programmgesteuerten Einheit vorgesehenen Einrichtung empfangen werden, wahlweise an eine der am ersten Bus BUS angeschlossenen Komponenten oder an die Debug-Ressourcen DR weiterzuleiten.

Die Peripherieeinheiten P1 bis P5 enthalten darüber hinaus jeweils eine in der Figur nicht gezeigt Steuerlogik, durch welche festgelegt wird, ob und gegebenenfalls zu welchen Zeiten oder unter welchen Bedingungen und/oder in welchem Umfang die jeweilige Peripherieeinheit für Datentransfers von und zu den am ersten Bus angeschlossenen Komponenten und von und zu den Debug-Ressourcen DR verwendet wird.

Der einfachste Fall besteht darin, daß eine oder mehrere Peripherieeinheiten komplett für Datentransfers von und zu den Debug-Ressourcen DR reserviert werden. Dies ist möglich, wenn die betreffenden Peripherieeinheit nicht anderweitig benötigt wird (beispielsweise weil der Ethernet-Anschluß in der aktuellen Anwendung der programmgesteuerten Einheit nicht benutzt wird).

Es könnte auch vorgesehen werden, daß von den Peripherieeinheiten bestimmte Mindestbandbreiten für Datentransfers von und zu den am ersten Bus BUS angeschlossenen Komponenten und/oder von und zu anderen Peripherieeinheiten und/oder von und zu den Debug-Ressourcen DR reserviert werden.

Es könnte aber auch vorgesehen werden, daß die Peripherieeinheiten die zu transferierenden Daten beispielsweise in Abhängigkeit von der Datenquelle und/oder vom Datenziel priorisieren, also beispielsweise über den Bus STI-BUS erhaltene Daten nur ausgeben, wenn und so lange sie nicht gleichzeitig über den ersten Bus BUS auszugebende Daten erhalten.

Unabhängig von alledem ist es möglich,
- daß die von und zu den Debug-Ressourcen zu transferierenden Daten gleichzeitig von mehreren Peripherieeinheiten ausgegeben bzw. empfangen werden, und
- daß verschiedene Teile der von und zu den Debug-Ressourcen zu transferierenden Daten von verschiedenen Peripherieeinheiten ausgegeben bzw. empfangen werden.
   Die Steuerlogik wird - sofern dies notwendig ist - im betrachteten Beispiel von der CPU, genauer gesagt durch das von der CPU ausgeführte Programm gesteuert, könnte aber auch von den Debug-Ressourcen oder einer außerhalb der programmgesteuerten Einheit vorgesehenen Einrichtung gesteuert werden.
   Es könnte aber auch vorgesehen werden, an den STI-BUS ein zusätzliches intelligentes System, beispielsweise eine weitere CPU anzuschließen. Dieses zusätzlich intelligente System kann z.B. die Datenübertragung optimieren, die Zugriffe auf die Peripherieeinheiten arbitrieren, und gegebenenfalls weitere Aufgaben übernehmen; die Optimierung der Datenübertragung kann beispielsweise darin bestehen,
- daß die von den Debug-Ressourcen ausgegebenen Daten vorverarbeitet oder in ein anderes Format umgesetzt werden,
- daß die Daten komprimiert oder dekomprimiert werden,
- daß die Daten bei Bedarf (beispielsweise wenn die Peripherieeinheiten P1 bis P5 nicht über ausreichend freie Übertragungskapazitäten verfügen) in der programmgesteuerten Einheit im Umfang reduziert oder zwischengespeichert werden, und/oder
- daß festgelegt bzw. ermittelt wird, welche Daten oder Datenteile über welche Peripherieeinheit zu übertragen sind bzw. empfangen wurden.
   Die beschriebene programmgesteuerte Einheit ermöglicht es, zwischen den Debug-Ressourcen DR und einer außerhalb der programmgesteuerten Einheit vorgesehenen Einrichtung zu transferierende Daten über in der programmgesteuerten Einheit ohnehin vorhandene Schnittstellen und Pins zu übertragen.
   Dadurch entfällt die Notwendigkeit, eine eigene Schnittstelle und zusätzliche Pins für Datentransfers von und zu den Debug-Ressourcen vorsehen zu müssen.
   Dadurch, daß die Debug-Ressourcen DR über einen eigenen Bus, nämlich den Bus STI-BUS mit den Peripherieeinheiten verbunden sind, über welche Daten aus der programmgesteuerten Einheit ausgegeben und von der programmgesteuerten Einheit empfangen werden können, kann ausgeschlossen werden,
- daß Datentransfers von und zu den Debug-Ressourcen den Betrieb der programmgesteuerten Einheit beeinträchtigen, und
- daß Datentransfers zwischen den am ersten Bus angeschlossenen Komponenten die Datentransfers von und zu den Debug-Ressourcen beeinträchtigen.

Es dürfte einleuchten, daß sich die beschriebene programmgesteuerte Einheit in vielfacher Hinsicht modifizieren läßt.

Beispielsweise lassen sich die vorstehend beschriebenen Besonderheiten auch bei programmgesteuerten Einheiten einsetzen, die mehrere Cores und/oder mehr oder weniger andere Komponenten enthalten.

Ferner ist es möglich, die von den Debug-Ressourcen auszugebenden Daten nicht sofort über die Schnittstelle SS aus der programmgesteuerten Einheit auszugeben, sondern innerhalb der programmgesteuerten Einheit zu speichern, bis sie von der externen Einrichtung, für welche diese Daten bestimmt sind, angefordert werden.

In einer wie beschrieben oder ähnlich aufgebauten programmgesteuerten Einheit besteht unabhängig von den Einzelheiten der praktischen Realisierung keine Notwenigkeit, für den Austausch von Daten zwischen den Debug-Ressourcen und einer außerhalb der programmgesteuerten Einheit vorgesehenen Einrichtung eine eigene Schnittstelle und eigene Pins vorzusehen.

Bezugszeichenliste
- BIF: Break-Interface
- BUS: interner Bus
- BPI: Interface zu BUS
- CPU: CPU
- DM: Datenspeicher
- DMU: Datenspeicher-Managementeinheit
- DR: Debug-Ressourcen
- IIF: Injection-Interface
- Px: Peripherieeinheiten
- PM: Programmspeicher
- PMU: Programmspeicher-Managementeinheit
- STI: Interface zu STI-BUS
- STI-BUS: interner Bus
- TIF: Trace-Interface

## Patentansprüche

1. Programmgesteuerte Einheit mit einer CPU (CPU), mit über einen internen Bus (BUS) mit der CPU verbundenen Peripherieeinheiten (P1 bis Pn), und mit Debug-Ressourcen (DR), unter Verwendung welcher in der programmgesteuerten Einheit ablaufende Vorgänge verfolgbar und beeinflußbar sind,
**dadurch gekennzeichnet,**
**daß** die Debug-Ressourcen (DR) und Peripherieeinheiten (P1 bis P5), welche Daten aus der programmgesteuerten Einheit ausgeben und/oder der programmgesteuerten Einheit von außen zugeführte Daten entgegennehmen und weiterleiten können, über einen zweiten internen Bus (STI-BUS) miteinander verbunden sind, und daß zwischen den Debug-Ressourcen und außerhalb der programmgesteuerten Einheit vorgesehenen Einrichtungen zu übertragende Daten über den zweiten internen Bus und einzelne, mehrere oder alle der daran angeschlossenen Peripherieeinheiten übertragen werden.

2. Programmgesteuerte Einheit nach Anspruch 1,
**dadurch gekennzeichnet,**
**daß** die Peripherieeinheiten (P1 bis P5) in der Lage sind, wahlweise über den ersten internen Bus (BUS) erhaltene Daten oder über den zweiten internen Bus (STI-BUS) erhaltene Daten aus der programmgesteuerten Einheit auszugeben.

3. Programmgesteuerte Einheit nach Anspruch 1 oder 2,
**dadurch gekennzeichnet,**
**daß** die Peripherieeinheiten (P1 bis P5) in der Lage sind, von außerhalb der programmgesteuerten Einheit erhaltene Daten wahlweise über den ersten internen Bus (BUS) oder über den zweiten internen Bus (STI-BUS) weiterzuleiten.

4. Programmgesteuerte Einheit nach einem der vorhergehenden Ansprüche,
**dadurch gekennzeichnet,**
**daß** die Peripherieeinheiten (P1 bis P5), die sowohl mit dem ersten internen Bus (BUS) als auch mit dem zweiten internen Bus (STI-BUS) verbunden sind, eine Steuerlogik enthalten, durch welche festgelegt wird, ob und/oder unter welchen Umständen sie die ihnen über den ersten internen Bus und den zweiten internen Bus zugeführten Daten aus der programmgesteuerten Einheit ausgeben.

5. Programmgesteuerte Einheit nach einem der vorhergehenden Ansprüche,
**dadurch gekennzeichnet,**
**daß** die Peripherieeinheiten (P1 bis P5), die sowohl mit dem ersten internen Bus (BUS) als auch mit dem zweiten internen Bus (STI-BUS) verbunden sind, eine Steuerlogik enthalten, durch welche festgelegt wird, ob und/oder unter welchen Umständen sie von außerhalb der programmgesteuerten Einheit erhaltene Daten entgegennehmen und weiterleiten.

6. Programmgesteuerte Einheit nach Anspruch 5,
**dadurch gekennzeichnet,**
**daß** die Steuerlogik durch das von der CPU (CPU) ausgeführte Programm gesteuert wird.

7. Programmgesteuerte Einheit nach Anspruch 5,
**dadurch gekennzeichnet,**
**daß** die Steuerlogik durch die Debug-Ressourcen (DR) gesteuert wird.

8. Programmgesteuerte Einheit nach einem der vorhergehenden Ansprüche,
**dadurch gekennzeichnet,**
**daß** am zweiten internen Bus (STI-BUS) ein intelligentes System angeschlossen ist, welches die Zugriffe auf die Peripherieeinheiten (P1 bis P5), die sowohl mit dem ersten internen Bus (BUS) als auch mit dem zweiten internen Bus (STI-BUS) verbunden sind, arbitriert.

9. Programmgesteuerte Einheit nach Anspruch 8,
**dadurch gekennzeichnet,**
**daß** das intelligente System durch eine weitere CPU gebildet wird.

10. Programmgesteuerte Einheit nach Anspruch 8 oder 9,
**dadurch gekennzeichnet,**
**daß** das intelligente System die Datenübertragung optimiert.

11. Programmgesteuerte Einheit nach einem der vorhergehenden Ansprüche,
**dadurch gekennzeichnet,**
**daß** es von der Datenquelle und/oder vom Datenziel abhängig gemacht wird, ob und gegebenenfalls welche Daten die Peripherieeinheiten (P1 bis P5) aus der programmgesteuerten Einheit ausgeben oder von außerhalb der programmgesteuerten Einheit entgegennehmen und weiterleiten.

12. Programmgesteuerte Einheit nach einem der vorhergehenden Ansprüche,
**dadurch gekennzeichnet,**
**daß** es von einer den möglichen Datenquellen und/oder Datenzielen zugeordneten Bandbreite abhängig gemacht wird, ob und gegebenenfalls welche Daten die Peripherieeinheiten (P1 bis P5) aus der programmgesteuerten Einheit ausgeben oder von außerhalb der programmgesteuerten Einheit entgegennehmen und weiterleiten.

## Claims

1. Program-controlled unit having a CPU (CPU), having peripheral units (P1 to Pn) which are connected to the CPU via an internal bus (BUS), and having debug resources (DR), which can be used to trace and influence operations taking place in the program-controlled unit, **characterized in that** the debug resources (DR) and peripheral units (P1 to P5), which output data from the program-controlled unit and/or can receive and pass on data which is supplied to the program-controlled unit from the outside, are connected to one another via a second internal bus (STI-BUS), and **in that** data which is to be transmitted between the debug resources and devices provided outside the program-controlled unit is transmitted via the second internal bus and individual, a plurality of, or all the peripheral units connected thereto.

2. Program-controlled unit according to Claim 1, **characterized in that** the peripheral units (P1 to P5) are capable of outputting data from the program-controlled unit which has been acquired either via the first internal bus (BUS) or via the second internal bus (STI-BUS).

3. Program-controlled unit according to Claim 1 or 2, **characterized in that** the peripheral units (P1 to P5) are capable of passing on data acquired from outside the program-controlled unit, either via the first internal bus (BUS) or via the second internal bus (STI-BUS).

4. Program-controlled unit according to one of the preceding claims, **characterized in that** the peripheral units (P1 to P5) which are connected both to the first internal bus (BUS) and to the second internal bus (STI-BUS) contain a control logic by means of which it is specified whether, and/or under which circumstances, they output the data from the program-controlled unit which has been supplied to them via the first internal bus and the second internal bus.

5. Program-controlled unit according to one of the preceding claims, **characterized in that** the peripheral units (P1 to P5) which are connected both to the first internal bus (BUS) and to the second internal bus (STI-BUS) contain a control logic by means of which it is specified whether, and/or under which circumstances, they receive and pass on data which has been acquired from outside the program-controlled unit.

6. Program-controlled unit according to Claim 5, **characterized in that** the control logic is controlled by the program executed by the CPU (CPU).

7. Program-controlled unit according to Claim 5, **characterized in that** the control logic is controlled by the debug resources (DR).

8. Program-controlled unit according to one of the preceding claims, **characterized in that** an intelligent system which arbitrates the accesses to the peripheral units (P1 to P5) which are connected both to the first internal bus (BUS) and to the second internal bus (STI-BUS) is connected to the second internal bus (STI-BUS).

9. Program-controlled unit according to Claim 8, **characterized in that** the intelligent system is formed by a further CPU.

10. Program-controlled unit according to Claim 8 or 9, **characterized in that** the intelligent system optimizes the transmission of data.

11. Program-controlled unit according to one of the preceding claims, **characterized in that** whether, and if so which, data is output from the program-controlled unit, or received from outside the program-controlled unit and passed on, by the peripheral units (P1 to P5) is made dependent on the data source and/or the destination of the data.

12. Program-controlled unit according to one of the preceding claims, **characterized in that** whether, and if so which, data is output from the program-controlled unit, or received from outside the program-controlled unit and passed on, by peripheral units (P1 to P5) is made dependent on a bandwidth assigned to the possible data sources and/or destinations of data.

## Revendications

1. Unité commandée par programme avec un CPU (CPU), avec des unités périphériques (P1 à Pn) reliées au CPU par l'intermédiaire d'un bus interne (BUS), et avec des ressources de débogage (DR), dont l'utilisation permet de suivre et d'influencer l'exécution de processus dans l'unité commandée par programme,
**caractérisée en ce que** les ressources de débogage (DR) et les unités périphériques (P1 à P5), qui peuvent fournir des données provenant de l'unité commandée par programme et/ou qui peuvent recevoir des données acheminées de l'extérieur à l'unité commandée par programme et les retransmettre, sont reliées entre elles par l'intermédiaire d'un deuxième bus interne (STI-BUS), et que les données à transmettre entre les ressources de débogage et des dispositifs prévus à l'extérieur de l'unité commandée par programme, sont transmises par l'intermédiaire du deuxième bus interne et une seule unité périphérique, plusieurs, ou toutes les unités périphériques qui y sont raccordées.

2. Unité commandée par programme selon la revendication 1,
**caractérisée en ce que** les unités périphériques (P1 à P5) sont en mesure de fournir à partir de l'unité commandée par programme, au choix des données obtenues par l'intermédiaire du premier bus interne (BUS) ou des données obtenues par l'intermédiaire du deuxième bus interne (STI-BUS).

3. Unité commandée par programme selon la revendication 1 ou 2,
**caractérisée en ce que** les unités périphériques (P1 à P5) sont en mesure de retransmettre des données obtenues à partir de l'extérieur de l'unité commandée par programme, au choix par l'intermédiaire du premier bus interne (BUS) ou par l'intermédiaire du deuxième bus interne (STI-BUS).

4. Unité commandée par programme selon une des revendications précédentes,
**caractérisée en ce que** les unités périphériques (P1 à P5) reliées non seulement au premier bus interne (BUS) mais encore au deuxième bus interne (STI-BUS), contiennent une logique de commande qui permet de définir si et/ou dans quelles circonstances elles fournissent à partir de l'unité commandée par programme, les données qui leur sont acheminées par l'intermédiaire du premier bus interne et du deuxième bus interne.

5. Unité commandée par programme selon une des revendications précédentes,
**caractérisée en ce que** les unités périphériques (P1 à P5) reliées non seulement au premier bus interne (BUS) mais encore au deuxième bus interne (STI-BUS), contiennent une logique de commande qui permet de définir si et/ou dans quelles circonstances elles acceptent et elles retransmettent des données obtenues à partir de l'extérieur de l'unité commandée par programme.

6. Unité commandée par programme selon la revendication 5,
**caractérisée en ce que** la logique de commande est commandée par le programme exécuté par le CPU (CPU).

7. Unité commandée par programme selon la revendication 5,
**caractérisée en ce que** la logique de commande est commandée par les ressources de débogage (DR).

8. Unité commandée par programme selon une des revendications précédentes,
**caractérisée en ce qu'**un système intelligent est raccordé au deuxième bus interne (STI-BUS) et qu'il arbitre les accès aux unités périphériques (P1 à P5) reliées non seulement au premier bus interne (BUS) mais encore au deuxième bus interne (STI-BUS).

9. Unité commandée par programme selon la revendication 8,
**caractérisée en ce que** le système intelligent est constitué par un autre CPU.

10. Unité commandée par programme selon la revendication 8 ou 9,
**caractérisée en ce que** le système intelligent optimise la transmission des données.

11. Unité commandée par programme selon une des revendications précédentes,
**caractérisée en ce qu'**il dépend de la source de données et/ou de la destination des données, si et le cas échéant quelles données les unités périphériques (P1 à P5) fournissent à partir de l'unité commandée par programme ou acceptent à partir de l'extérieur de l'unité commandée par programme et les retransmettent.

12. Unité commandée par programme selon une des revendications précédentes,
**caractérisée en ce qu'**il dépend de la largeur de la bande attribuée à une des sources possibles de données et/ou de destination des données, si et le cas échéant quelles données les unités périphériques (P1 à P5) fournissent à partir de l'unité commandée par programme ou acceptent à partir de l'extérieur de l'unité commandée par programme et les retransmettent.
